**Europäisches Patentamt**

**European Patent Office**

**Office européen des brevets**

(11) Publication number : **0 477 104 A2**

# (12) EUROPEAN PATENT APPLICATION

(21) Application number : **91402501.0**

(22) Date of filing : **19.09.91**

(51) Int. Cl.⁵ : **B07C 5/36**

(30) Priority : **21.09.90 IT 2153890**

(43) Date of publication of application :
**25.03.92 Bulletin 92/13**

(84) Designated Contracting States :
**DE DK ES FR GB**

(71) Applicant : **ALCATEL FACE S.p.A.**
**Viale L. Bodio 33/39**
**I-20158 Milano (IT)**

(72) Inventor : **Passero, Adolfo**
**Via Tanucci 33**
**I-81100 Caserta (IT)**

(74) Representative : **Weinmiller, Jürgen et al**
**Lennéstrasse 9 Postfach 24**
**W-8133 Feldafing (DE)**

(54) **Modular sorting unit for conveyor systems.**

(57)    A modular sorting unit comprising transport members (6) operatively mounted on a support structure 2 and defining a support and sliding surface for the articles (8) to be conveyed by a feeding conveyor device (3) towards a primary collection device (4), sorting members (9) located next to transport members (6) and designed to send articles on auxiliary collection devices (5), and drive means (12) selectively actuable and each operatively connected to at least one sorting member.

EP 0 477 104 A2

FIG.1

The present invention relates to a modular sorting unit for conveyor systems.

As it is known, in conveyor systems, realized by using conveyor belts for the transfer of a very wide range of articles in various fields, production or services the use of modular sorting units is often required for the selective lateral transfer of single articles by diverting them from the main conveyance direction, to auxiliary collection devices. The commands for such lateral transfer are given by an operator or by electronic means generally comprising a station for recognizing and classifying each of the articles, e.g. suitable to read-out bar-codes applied on the articles, located upstream of the sorting unit itself.

Conventional modular sorting units, located downstream of a feeding conveyor device, which the articles to be sorted come from, and upstream of a primary collection device on which the same articles are eventually advanced in the main feed direction, comprise transport members for moving the articles in said main feed direction and sorting members substantially designed for moving the articles in a transverse direction to said main feed direction to convey singly each of them on the auxiliary collection devices, which generally extend in a transverse direction to the feeeding conveyor device and to the primary collection device.

Several embodiments of conventional modular sorting units are known in the art.

For instance, in a first embodiment it is contemplated that the transport members are in the form of drag belts passing around respective pulleys, spaced and paralleled up in the main direction in such a way as to define at the top a support and sliding surface.

The sorting members comprise a plurality of rollers rotatably driven to convey selectively in the left and right directions and fit between the spaced belts extending parallelly to them in the main feeding direction. All rollers are mounted on a support structure movable from a rest position in which the rollers are just minimally below the sliding surface as defined by the drag belts which convey the articles towards the primary collecting device, to an operating position in which the rollers almost immediately rise above the belts and are rotated so that the article, which has been raised with respect to the belts, can be diverted to the left or right and conveyed on the auxiliary collection devices.

In a second known embodiment, similar to the first one, it is contemplated that the transport members are composed of rollers having their axes perpendicular to the main feed direction while the sorting members consist of drag belts running parallel to the rollers and raisable to an operative position in which they rise above the rollers to divert the articles to the left or right on the auxiliary collection devices.

In a further known embodiment the sorting members are not raisable as described above but consist of thrust elements, operated by belts, which by moving contemporaneously in a direction perpendicular to the main direction, grip an article and divert it towards an auxiliary collection device.

However all known modular sorting units have some limitations and drawbacks.

First of all they allow to sort the articles only one at time and next article must follow considerably and suitably spaced on the feed conveyor device. In fact, when an article is to be diverted, it is necessary to provide that it has to be stopped on the sorting unit and that next article reaches the sorting unit, to be diverted on the auxiliary collection device or to be conveyed in the main direction, only when the preceding article has left the sorting unit. In practice the sorting rates and time intervals between two consecutive articles cannot overcome certain limits. Moreover, it has to be noted that known modular sorting units are actuated always in like manner regardless of dimension of articles to be sorted. This involves, in other words, complexity in manufacturing and high dimension in actuating means. It follows high implementation costs, since it is generally a question of moving always and contemporaneously a high number of sorting members even if, in pratice, when diverting small dimension articles, only few sorting members are effectively involved.

Furter, it is evident that such embodiments involve also power consuming during operation during operation and maintenance costs which go beyond the values strictly necessary for effectively performed operations.

In this situation, it is the task of the invention to provide a modular sorting unit for conveyor systems that is able to overcome substantially the abovementioned drawbacks.

Within said task, it is a main object of the invention to realize a modular sorting unit which permits to increase to a large extent velocity and rates of sorting the articles carried by the conveyor systems themselves.

Another important object of the invention is to provide a modular sorting unit that is simple to manufacture and nevertheless flexibile as to dimension of the articles to be sorted.

It is a further object of the invention to provide at least an embodiment of the invention which is advantageous per se and such to represent a technical step forward in the specific field.

The mentioned task and the specified objects, and further objects which will become more apparent hereinafter, are substantially achieved by a modular sorting unit for conveyor systems comprising : a support structure disposed between a feeding conveyor device extending upstream from said support structure, a primary collection device substantially aligned with said feeding conveyor device downstream from said support structure, and at least one auxiliary collection device extending substantially in transverse direction with respect to said feeding conveyor device and primary collection device; transport members operatively mounted on said support structure and defining a support and sliding surface for articles to be conveyed in a main feed direction by said feeding conveyor device towards said primary collection device; and sorting members disposed near said transport members and capable of diverting said articles to said at least one auxiliary collection device, characterized in that it comprises drive means selectively actuable and operatively connected each with at least one of said sorting members.

The following description of a preferred, but not exclusive, embodiment of a modulator sorting unit according to the invention is given by way of an indicative and not limitative example in connection with the attached drawings, in which :

– fig.1 shows in a perspective view with portions broken away, a modular sorting unit according to the invention disposed between a feeding conveyor device and collection devices;

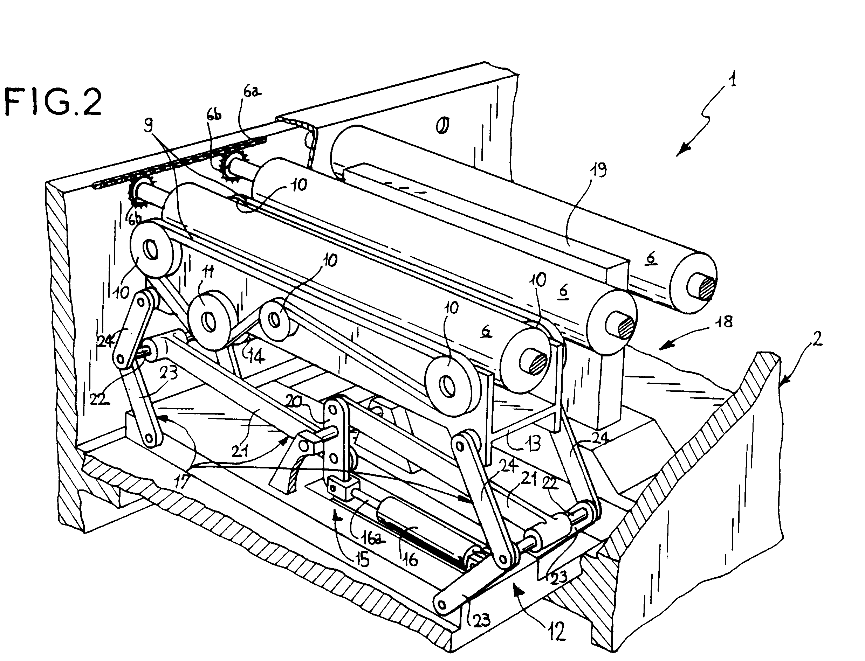

– fig.2 illustrates, in a perspective view with portions broken away, some main parts of the unit in fig.1.

With reference to the mentioned figures, the modular sorting unit according to the invention is designated as a whole by reference numeral 1.

It comprises a support structure 2 disposed between a feeding conveyor device 3 having at the top a first conveyor belt 3a and extending upstream from the modulator sorting unit 1 itself, a primary collection device 4 aligned downstream of the modular sorting unit 1 and having at the top a second conveyor belt 4a, and a plurality of auxiliary collection devices 5 extending substantially in a transverse direction with respect to the feeding conveyor device 3 and primary collection device 4 and laterally with respect to the modular sorting unit 1.

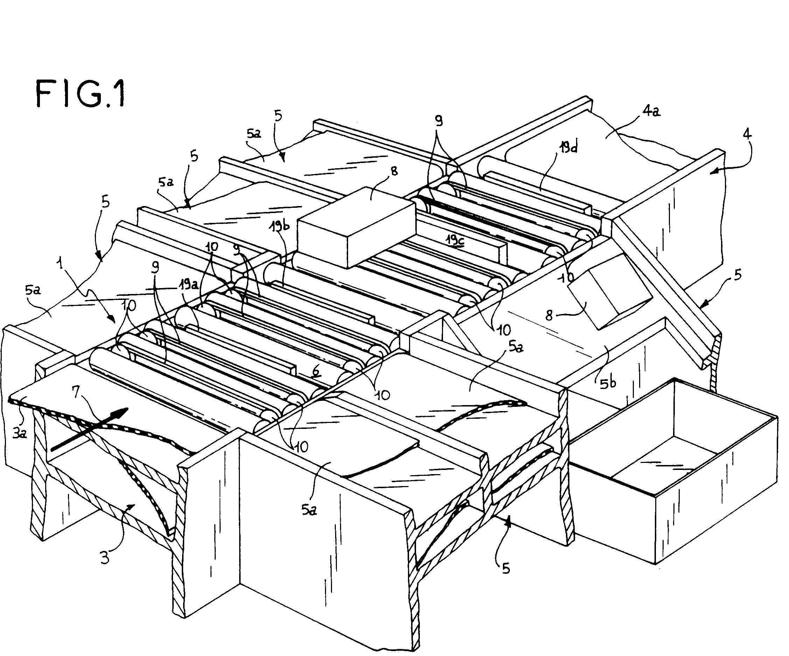

Fig.1 shows, by way of an indicative example, six auxiliary collection devices 5 arranged three by three on the opposit sides of the modular unit 1 and having at the top, e.g., collecting belts 5a or discharge chutes 5b.

Transport members 6 are operatively mounted on a support structure 2 and are composed of rollers paralleled up and having their axes substantially perpendicular to a main feed direction 7 of articles 8, aligned with feeding conveyor device 3 and primary collection device 4. Rollers 6 are operated for instance by means of a chain 6a engaged by sprockets 6b rigidly fixed at one end of the rollers themselves, and define on the whole a support and sliding surface for the articles 8 substantially flush with belts 3a and 4a, respectively of feeding conveyor device 3 and primary collection device 4.

Sorting members 9 which fit between the spaced rollers 6 and run parallel to them, are composed of e.g. drag belts engaged by respective transmission pulleys 10 and driving pulleys 11.

In an original manner, sorting members 9 are subdivided into groups, each consisting of e.g. two adjacent sorting members, operatively and individually connected with drive means 12 selectively, i.e independently each other, actuated.

In practice each drive means 12 comprises a support frame 13 on which transmission pulley 10 and drive pulley 11, corresponding to a group of sorting members 9, are rotatably mounted. Such pulleys 10, 11 are driven by a sole motor 14.

The support frame 13 is movable by actuator means 15 from a rest position, in which the corresponding drag belts 9 are just minimally below the tops of rollers 6 defining said support and sliding surface, to an operative position in which the drag belts 9 rise above the support and sliding surface, grip an article 8 and divert it on an auxiliary collection device 5.

Actuator means 15 are composed e.g. of a fluid cylinder 16, engaged with the support structure 2 and having a piston-rod 16a acting upon a chain of rods 17, capable of transforming a traverse of piston-rod 16a into a vertical traverse of support frame 13. To this end, the chain of rods 17 comprises a rocking lever 20 swingable about a horizontal axis upon command of fluid cylinder 16 and acting, through a pair of tension rods 21, upon a pair of connecting pins 22 pivoted on which are first ends of first and second lifting levers 23, 24 having their second ends pivotally mounted respectively on support structure 2 and support frame 13.

Downstream of each group of sorting members 9 and therefore of each drive means 12 and after the roller 6 corresponding to the same group of sorting members 9, are stop means 18 comprising a stop-wall 19 slidably mounted on the support structure 2, transversal to the main feed direction 7 and designed to stop selectively an article 8. More precisely the stop-wall 19 can be moved selectively up and down by a cylinder (not shown in the figure) from a rest position in which it is just minimally below said support and sliding surface, to an actuated position where it rises above said surface so as to provide an abutment surface for the articles moved by rollers 6.

In the embodiment shown in fig.1, four stop-walls are, for instance, provided, each being associated with a group of sorting members by two drag belts 9 fit between three consecutive rollers 6. In departing from conveyor device 3 in the main direction 7, it is therefore possible to individuate a series of stop-walls 19 comprising a first wall designated by 19a, a second one 19b, a third one 19c and a fourth one 19d.

The operation of a modular sorting unit for conveyor systems as depicted above in a mainly structural description, is the following.

Upstream from the modular sorting unit 1, articles 8 conveyed by feeding conveyor device 3 are subjected, in a manner known per se', to an identification phase and, advantageously, to a detection of their dimension in the main direction 7. The identification phase con be carried out, e.g. by reading out a bar code applied on each article and the dimensional detection by means of suitable photoelectric cells. An electronic control unit, known per se' and not illustrated in the drawings, handles all data so acquired and determines which of the collection devices 4,5 each article is to be sorted on.

Referring now to fig.1, it is assumed a first incoming article to be diverted e.g. to the right on chute 5b. In such instance the fourth stop wall 19d is raised up to the actuated position so as to stop the article. The wall 19d can also exert an eventual straightening action when the article is pushed against it by rollers 6 slantwise with respect to the main direction 7.

At this point the drive means 12 corresponding to the fourth group of sorting members 9 adjacent to the fourth wall 19d, is actuated to raise the support frame 13 and therefore the article from the rollers 6. Motor 14, being run in the desired direction of rotation drives drag belts 9 which divert the article to the requested auxiliary collection device. During this operation a following article can be stopped e.g. against third stopwall 19c and also this article can be diverted, after a very small time interval, like the mentioned first article, by actuating the group of sorting elements comprised between the third stop-wall 19c and the second one 19b.

Similarly a successive actuation of one or both groups of sorting elements located upstream of second stop-wall 19b and first stop-wall 19a can be conceived.

After all the modular sorting unit according to the invention is capable of sorting, almost contemporaneously, two or more articles conveyed by feeding conveyor device 3.

Therefore it is not necessary to wait until a sorting operation of an article is completed in order that one or more successive articles can be sorted. The sorting rates are hence highly increased with respect to prior art modular sorting units.

In case an article of higher dimension, e.g. greater than the distance between fourth wall 19d and third wall 19c, is to be diverted e.g. on the chute 5b, wall 19c is maintained down and the last two groups of sorting members are contemporaneously actuated in order to raise and divert the article on a suitable surface.

The invention achieves all the above- mentioned objects and presents important advantageous aspects.

In particular it has to be noted that each group of sorting members, having small dimension, requires a motor and actuating means which are simple in construction and low power consuming.

Moreover, the possibility to actuate only those groups of sorting members strictly necessary in relation to the dimension of articles, involves a cost reduction in operation and a smaller wear and tear of parts.

Finally it is important to point out that the illustrated embodiment is advantageous also in its specific aspects.

The invention is susceptible to several modifications and variations all falling within the scope of the inventive concept. For instance, the drive means of each group of sorting members can be realised by means of fluid cylinders acting directly upon the support frame 13 in the raising and lowering direction of the latter.

Moreover all details can be replaced by others which are technically equivalent.

In implementing the invention, material, shape and dimension can be chosen according to the requirements.

## Claims

1. Modular sorting unit for conveyor systems comprising :
   – a support structure disposed between a feeding conveyor device extending upstream from said support structure, a primary collection device, substantially aligned with said feeding conveyor device, downstream from said support structure and at least one auxiliary collection device extending substantially in a transverse direction with respect to said feeding conveyor device and primary collection device;
   – transport members operatively mounted on said support structure and defining a support and sliding surface for articles to be conveyed in a main feed direction by said feeding conveyor device towards said primary collection device; and
   – sorting members disposed near said transport members and capable of diverting said articles to said at least one auxiliary collection device,
   characterized in that it comprises drive means selectively actuable and operatively connected each with at least one of said sorting members.

2. Modular sorting unti according to claim 1, wherein each drive means is operatively connected with a group of said sorting members, each group comprising at least two sorting members reciprocally contiguous.

3. Modular sorting unit according to claim 2, wherein the transport members comprise a plurality of rollers parraled up and having their axes substantially perpendicular to said main feed direction, and wherein said sorting members comprise a plurality of drag belts each fit between two of said rollers, extending parallel thereto and operatively mounted between respective driving and transmission pulleys, each drive means comprising a support frame for supporting a corresponding group of said sorting members and means for moving said support frame selectively from a rest position in which the corresponding drag belts are just minimally below said support and sliding surface to an operative position in which the corresponding drag belts rise above the support and sliding surface so as to raise the articles to be diverted to said at least one auxiliary collection device.

4. Modular sorting unit according to claim 2, wherein located downstream of each group of sorting members are stop means designed to selectively stop an article, carried by said transport members, over one group of sorting members.

5. Modular sorting unit according to claim 4, wherein said stop means comprise a stop-wall slidably engaged to the support structure in a transverse direction to feed direction, said stop-wall being movable from a rest position in which it is below said support and sliding surface to an actuaded position in which it rises above said support and sliding surface to provide an abutment surface for articles carried by transport members.

6. Modular sorting unit for conveyor systems characterized by comprising one or more of the above described or illustrated technical solutions.

FIG.1

EP 0 477 104 A2

FIG.2

EP 0 477 104 A2